# EUROPEAN PATENT APPLICATION

(11) **EP 2 205 025 A1**
(43) Date of publication of application: **07.07.2010**
(21) Application number: 08841004.8
(22) Date of filing: 22.10.2008
(51) Int. Cl.: H04W 40/34, H04W 36/14, H04W 40/06, H04W 80/04

(54) **COMMUNICATION SYSTEM, MOBILE TERMINAL, AND NETWORK NODE**

(30) Priority: 22.10.2007 JP 2007273749; 04.09.2008 JP 2008226755
(71) Applicant: Panasonic Corporation, Kadoma-shi Osaka 571-8501 (JP)
(72) Inventor: HIRANO, Jun c/o Panasonic Corp., IPROC, Chuo-ku, Osaka-shi, Osaka 540-6207 (JP); ARAMAKI, Takashi c/o Panasonic Corp., IPROC, Chuo-ku, Osaka-shi, Osaka 540-6207 (JP); ASO, Keigo c/o Panasonic Corp., IPROC, Chuo-ku, Osaka-shi, Osaka 540-6207 (JP); LIM, Chun Keong Benjamin c/o Panasonic Singapore Labs.Pte.Ltd., Tai Seng Industrial Estate, Singapore 534415 (SG); NG, Chan Wah c/o Panasonic Singapore Labs.Pte.Ltd., Tai Seng Industrial Estate, Singapore 534415 (SG); KOH, Tien Ming Benjamin c/o Panasonic Singapore Labs.Pte.Ltd., Tai Seng Industrial Estate, Singapore 534415 (SG); TAN, Pak Yew c/o Panasonic Singapore Labs.Pte.Ltd., Tai Seng Industrial Estate, Singapore 534415 (SG)
(74) Representative: Grünecker, Kinkeldey, Stockmair & Schwanhäusser Anwaltssozietät
(86) International application number: PCT/JP2008/002989
(87) International publication number: WO 2009/054127

(57) **Abstract**

The invention discloses a technique to efficiently realize a routing based on preference of a mobile terminal in case the mobile terminal is connected to a mobility management domain of network base different from a home network domain. According to this technique, a mobile terminal (mobile node; MN) 101 has two interfaces, and these interfaces are connected to a mobility management domain (local mobility domain) 11 under the condition that these interfaces are connected to MAG 111 and MAG 112 respectively. In case MN itself decides one of the interfaces to be used for a specific packet flow communication, a routing preference to instruct that the packet flow is to be sent on a routing via the interface is notified to MAG. When MAG notifies the routing preference to LMA (filtering agent) 110, filtering based on the routing preference is carried out.

## Description

### TECHNICAL FIELD

The present invention relates to a communication system, a mobile terminal, and a network node, which relate to communication technique based on the Internet Protocol (IP). In particular, the invention relates to a communication system, a mobile terminal, and a network node for setting packet transfer route (flow filtering), which corresponds to filter rules.

### BACKGROUND ART

For instance, the Non-Patent Document 1 as given below discloses a technique, according to which a mobile node (MN) can continuously use an unchangeable and fixed address according to the mobile IPv6 (MlPv6) even when a connection point to Internet is changed. The fixed address of MN in MlPv6 is an address in a home network domain of MN, and it is called "Home Address" (HoA). During the period when MN is connected to a foreign network domain, MN can have an IP address using a subnet prefix as notified from the foreign network domain. The IP address based on such arrangement is called "Care-of Address" (CoA), and MN can also be reached by this address.

In order to maintain reachability regardless of its connecting position, MN registers its own care-of address at a home agent (HA) by associating its own care-of address with the home address. According to MlPv6, HA is a router in the home network domain, and the current care-of address of MN is registered at HA. This registration is carried out when MN transmits a binding update (BU) message to HA.

In case MN is at a position away from the home network domain, HA intercepts a packet destined to the home address of MN, and the packet is sent via the related care-of address by tunneling.

According to MlPv6, a host has mobility management function. Therefore, MlPv6 is often called a host-based (terminal-based) mobility management protocol.

On the other hand, there is another method of mobility management, by which the signaling related to the mobility can be decreased when MN moves in a local mobility domain. For instance, the mobility management of MN can be supported by a proxy entity arranged in the local mobility domain. Such method of mobility management is called a mobility management of network base, and this is described in the Patent Document 1 or in the Non-Patent Document 2 as given below, for instance. In the present specification, not only the mobile terminal provided with the host-based mobile management protocol such as MlPv6 but also the mobile terminal under mobility management by the network-based mobility management domain is also called a mobile node (MN).

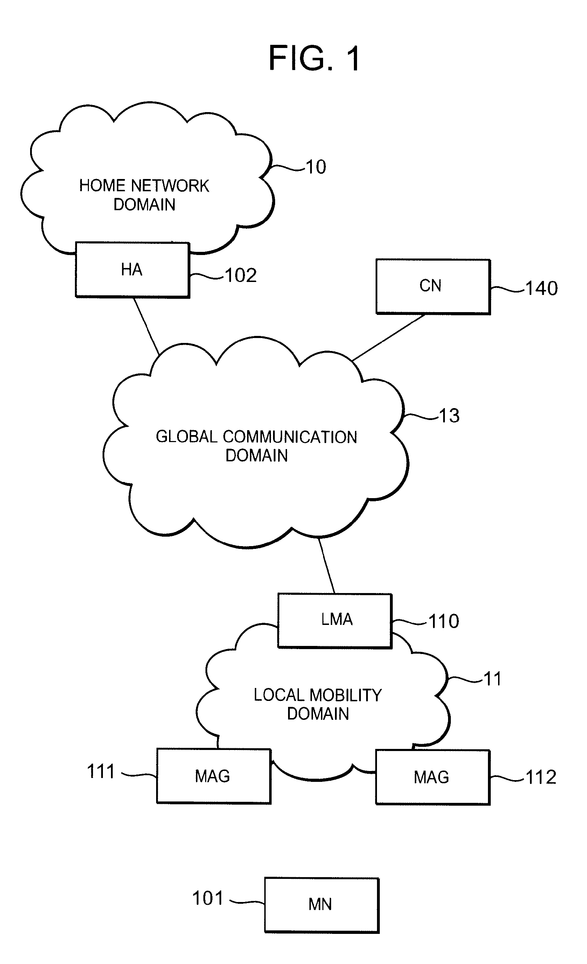

Fig. 1 is a schematical drawing to show an example of a network-based mobility management system according to the prior art. In Fig. 1, when the mobile node (MN 101) is originally connected to a home network domain 10, it performs communication session with a correspondent node (CN) by using a home address.

MN 101 is movable, and when it moves in a global communication domain 13, it surely continues communication with CN 140 by using MlPv6. Specifically, when MN 101 moves, it can register the care-of address of mobile destination at a home agent (HA) 102 in the home network domain by associating it with the home address.

When MN 101 moves to a local mobility domain 11, it presents an identifier specific to MN 101 (MN-ID) to receive access authentication processing and it is connected to a mobile access gateway (MAG). When association is made with a policy profile of MN 101 obtained from a local server (a server (not shown) in the local mobility domain 11), MN-ID is used in normal case.

In the policy profile, there are included, for instance: the feature of the network-based mobility service provided, an on-link prefix allocated to the mobile node, an address arrangement mode as allowed, a roaming policy, and other related parameters necessary for the network-based mobility service.

When MN 101 is connected to MAG 111, for instance, MAG 111 acquires a policy profile of MN 101 from a local server after succeeding in access authentication of MN 101. As a result, MAG 111 can acquire necessary information to execute mobility signaling of MN 101. Therefore, MAG 111 periodically transmits to MN 101 a router advertisement (RA) message including an on-link prefix allocated to MN 101.

When MN 101 finds out an on-link prefix by receiving an RA message, an IP address (e.g. a care-of address) is made up for communication, which is carried out via the interface connected to the local mobility domain 11. Each MAG in the local mobility domain 11 can acquire a profile of MN 101 by constantly referring to a local server. Therefore, regardless to which connection point (MAG) of the local mobility domain 11 it is connected, MN 101 can always identify the on-link prefix from the connected interface.

For instance, when MN 101 moves to MAG 112, MAG 112 acquires the on-link prefix of MN 101 from a local server according to MN-ID of MN 101 during the authentication processing. Therefore, regardless of the connection point in the local mobility domain 11, MN 101 can always use an IP address as made up at first (i.e. an IP address, which it has made up when it is first connected to the local mobility domain 11).

With regard to the routing in the local mobility domain 11, an entity called a local mobility anchor (LMA) 110 fulfills the function as a topological (logical) anchor point of each mobile node. Further, LMA 110 performs management of reachability on each mobile node. Therefore, LMA 110 has the feature similar to that of the home agent as described in the Non-Patent Document 1. That is, LMA 110 must be updated with respect to the current position of each MN 101 so that it can fulfill the function as an anchor point of each MN 101.

To carry out this updating, when MN 101 is connected to MAG, a proxy binding update (PBU) message is transmitted from MAG to LMA 110. By this PBU message, MN-ID, which is an identifier specific to MN 101, is registered by associating with information to identify the MAG (care-of address of MAG). By using the binding as registered by the PBU message, LMA 110 can forward a packet to MN 101 via an adequate MAG.

The problem, which occurs when the local mobility domain supports simultaneous connection of the mobile node by adopting the method of Monami6, is also referred in the description of the Patent Document 1, for instance.

In the Patent Document 2 as given below, a mechanism is disclosed, by which a gateway node can make inquiry to a policy control node for identifying the policy relating to a user device. Also, by applying this mechanism, the local mobility anchor can make inquiry to the home agent of the mobile node with regard to the routing preference of the mobile node.

Further, the mobile node can search a place (address of LMA) in the local mobility domain where the routing preference should be set, by using a searching mechanism such as information service as defined in IEEE 802.21. Further, by using IEEE 802.21, for instance, MN 101 can search the address of LMA 110. After identifying the address of LMA 110, MN 101 can perform communication with LMA 110 and can indicate to LMA 110 about the routing preference relating to the traffic flow from CN 140.

For instance, in Fig. 1, MN 101 is connected to MAG 111, and authentication processing is carried out between MN 101 and MAG 111. After succeeding in the authentication of MN 101, a PBU message for associating MN-ID of MN 101 with the care-of address of MAG 111 is transmitted to LMA 110, and a binding relating to MN 101 is registered at LMA 110.

When a packet is received, LMA 110 checks its own cache and searches an MN-ID, which is concurrent with the destination of the received packet. For instance, it is identified that the destination of the received packet concurs with MN-ID of MN 101, LMA 110 sends the packet to MAG 111 by tunneling based on the registered binding. Then, the packet is transferred from MAG 111 to MN 101.

Currently, with the introduction of portable electronic peripheral devices provided with a plurality of network interfaces, mobile node/router have the functions to register a plurality of care-of addresses to a predetermined home address. On a method of registration of a plurality of care-of addresses, discussions are now going on in Monami6 (Mobile Nodes and Multiple Interfaces in IPv6) Working Group of IETF.

For instance, according to the technique described in the Non-Patent Document 3 as given below, a plurality of care-of addresses can be registered by differentiating a plurality of bindings associated with one home address by an identification number called BID (binding specific identification information). BID is allocated to each of the interfaces or the care-of addresses, which are associated with a single home address of the mobile node/router. Therefore, the home address is associated with the mobile node/router itself, while it is associated so that each of a plurality of bindings registered by the mobile node can be discriminated.

The mobile node/router notifies BID to the home agent by using a binding update (BU) message, and the home agent records the BID on its own binding cache. Further, by registering a plurality of care-of addresses, the mobile node/router sets preference at the home agent, and selective routing of the traffic flow can be executed via the plurality of care-of addresses.

A method for setting the preference can be carried out by identifying each traffic flow by a specific identifier (flow ID; FID) as described in the Non-Patent Document 4 or in the Non-Patent Document 5 as given below, for instance. By this FID, the mobile node/router can instruct the home agent as to how a specific traffic flow should be forwarded.

In the Patent Document 3 as given below, a method is proposed, according to which the mobile device itself transmits a path setting message to start the setting of a routing path in the access network at the time of hand-off or starting. According to the technique disclosed in this Patent Document 3, a routing entry of the mobile device is prepared or updated on an access router when the path setting message is transmitted to the access router in the access network, to which the mobile device itself is connected. Further, the routing entry is prepared or updated at an upper router of network hierarchy when the path setting messages are transmitted one after another to the upper router (router of the next hop) of the network hierarchy from the access router. As a result, the routing entry of the mobile device is registered at the router in the access network, and the routing path of the mobile device is set in the access network.
[Non-Patent Document 1] D. Johnson, C. Perkins and J. Arkko: "Mobility Support in lPv6"; Internet Engineering Task Force Request for Comments 3775; June 2004.
[Non-Patent Document 2] S. Gundavelli, K. Leung, V. Devarapalli; K. Chowdhury and B. Patil: "Proxy Mobile lPv6"; Internet Engineering Task Force Internet Draft: draft-ietf-netlmm-proxymip6-00.txt; April 08, 2007.
[Non-Patent Document 3] R. Wakikawa, T. Ernst and K. Nagami: "Multiple Care-of Addresses Registration"; Monami6 Working Group Internet Draft: draft-ietf-monami6-multiplecoa-00.txt; June 12, 2006.
[Non-Patent Document 4] H. Soliman, et al.: "Flow Bindings in Mobile lPv6"; Internet Engineering Task Force Internet Draft: draft-soliman-monami6-flow-binding-00.txt; February 27, 2006.
[Non-Patent Document 5] C. Larsson, H. Levkowetz, H. Mahkonen and T. Kauppinen: "A Filter Rule Mechanism for Multi-access Mobile lPv6"; Internet Engineering Task Force Internet Draft: draft-larsson-monami6-filter-rules-01.txt; October 23, 2006.
[Patent Document 1] U.S. Patent Application Publication No. 2006-0209759
[Patent Document 2] International Patent Application Publication No. 2007-039006
[Patent Document 3] U.S. Patent No. 7,239,618

However, according to the prior art, there is a case where the routing to reflect the preference of the mobile terminal is not accomplished when the mobile terminal is connected to the network-based mobility management domain, which is different from the home network domain.

For instance, when MN 101 has a plurality of interfaces in Fig. 1, MN 101 can be connected to MAG 111 and MAG 112 at the same time. It is supposed here that there are two types of networks, i.e. a cellular network where MAG 111 is connected and a wireless local area network (WLAN) where MAG 112 is connected, in the local mobility domain 11. In this case, MN 101 has two interfaces, i.e. a cellular interface connected to MAG 111 and a WLAN interface connected to MAG 112. As a result, MN 101 has a plurality of care-of addresses in the local mobility domain 11, and a preference relating to a method to forward a traffic flow from CN 140 to MN 101 is set at HA 102.

By using the method of Monami6, each of MAG 111 and MAG 112 can register an identifier specific to the mobile node (MN-ID) at LMA 110. As a result, LMA 110 comprehends that MN 101 is connected to both of MAG 111 and MAG 112 and that two active routes to MN 101 are registered in the local mobility domain 10.

However, when a packet corresponding to MN-ID of MN 101 is received, LMA 110 must select and decide as to which of the MAGs the packet should be transferred for forwarding the packet to MN 101. It is supposed here, for instance, that MN 101 has set the preference at HA 102 to instruct to forward the traffic flow from CN 140 via the WLAN interface of MN 101. HA 102 transfers the packet to LMA 110 but it does not identify the preference set by MN 101. As a result, there is a possibility that LMA 110 may transfer the traffic flow destined to MN 101 via a non-preferable route (e.g. via MAG 111).

Also, according to the technique described in the Patent Document 1, there is a problem in that the mobile access gateway cannot identify the routing preference relating to the mobile node even when the mobile access gateway fulfills the function as a proxy of the mobile node, which has a plurality of interfaces in the local mobility domain. Therefore, the mobile access gateway cannot notify to a local mobility anchor as to which transmitting method the mobile node wants to have on the traffic flow in the local mobility domain.

According to the technique described in the Patent Document 2, a certain relationship (association) must be established between the home network domain and the local mobility domain, while there is a possibility that such type of association is not yet established (or cannot be established).

For instance, by using the context of the Third Generation Partnership Project (3GPP), it is assumed that the home network domain is a 3GPP core network of operator, and that the local mobility domain is a 3GPP access network not reliable (to the operator). In such case, it is difficult to establish an association between the two networks because the operator cannot rely on the local mobility domain.

According to the method, by which MN 101 identifies the address of LMA 110 by using the information service defined in IEEE 802.21 as described above, there is a problem that the mobile node must make inquiry to the local mobility domain in order to identify the setting position of the routing preference (LMA 110), and as a result, the system may be more complicated.

According to the technique disclosed in the Patent Document 3, the mobile device itself transmits a path setting message to start the setting of a routing path to the network, but its purpose is substantially different from the present invention. According to the technique disclosed in the Patent Document 3, when hand-off is carried out between base stations, a path setting message is transmitted to set a routing path for transmitting and receiving the packet at the connection destination based on the hand-off. Specifically, according to the technique disclosed in the Patent Document 3, for the purpose of eliminating the condition, in which the mobile device cannot transmit and receive the packet (in particular, the receiving of the packet destined to the mobile device) immediately after the hand-off, the mobile device itself notifies the connection by transmitting the path setting message, and when a message having this path setting message as trigger is transferred to each router in the network, the routing path of the mobile device is registered. Therefore, the technique disclosed in the Patent Document 3 has its purpose in the registration of the routing path of the mobile device, and it is not that the filter rule is set so that it passes a routing path as desired by the mobile device. Also, according to the technique disclosed in the Patent Document 3, the function to update the routing entry of the mobile device based on the message, which has the path setting message as trigger, must be introduced at each router in the network (i.e. at all routers).

### DISCLOSURE OF THE INVENTION

It is an object of the invention to accomplish a routing efficiently based on the preference of a mobile terminal when the mobile terminal is connected to a mobility domain of network case, which is different from a home network domain.

To attain the above object, the invention provides a communication system, which comprises a network where a network-based mobility management protocol is carried out, wherein:
preference information of communication of a mobile terminal connected to said network is notified to a filtering home agent, performing flow filtering relating to communication of said mobile terminal in said network.
With the arrangement as described above, it is possible to efficiently accomplish a routing based on the preference of a mobile terminal when the mobile terminal is connected to a network-based mobility management domain of network base different from the home network domain.

Also, the invention provides a mobile terminal connected to a network where a mobility management protocol of network base is carried out, wherein, said mobile terminal comprises:
one or more interfaces; and
preference notifying means for notifying said preference information to said network so that flow filtering based on the preference information of communication via said interface is carried out under the condition where said interface is connected to said network.
With the arrangement as described above, it is possible to efficiently realize a routing based on the preference of a mobile terminal when the mobile terminal is connected to a mobility management domain of network base different from the home network domain.

Further, to attain the above object, the present invention provides a network node, which is present in a network where a mobility management protocol of network base is carried out, wherein said network comprises:
filter non-setting identifying means for identifying that no filter rule is set to a flow on the mobile terminal connected to said network; and
preference setting means for setting preference information to said flow identified by said filter non-setting identifying means.
With the arrangement as described above, it is possible to efficiently realize a routing based on the preference of a mobile terminal when the mobile terminal is connected to a mobility management domain of network base different from the home network domain.

The present invention has the arrangement as described above, and it provides such effects that a routing based on the preference of the mobile terminal is efficiently realized when the mobile terminal is connected to a mobility management domain of network base different of the home network domain.

### BRIEF DESCRIPTION OF THE DRAWINGS

Fig. 1 is a schematical drawing to show an example of arrangement of a mobility management system of network base according to the prior art and to an embodiment of the present invention;
Fig. 2 is a block diagram to show an example of arrangement of a mobile node in the embodiment of the invention;
Fig. 3 is a flowchart to show an example of processing based on a route policy relating to the application in the embodiment of the invention;
Fig. 4 is a drawing to show an example of format of a filter message to be used for the setting of routing preference in a local mobility domain in the embodiment of the invention;
Fig. 5 is a flowchart relating to a reverse packet flow supposition to be executed by MAG (mobile access gateway) in the embodiment of the invention;
Fig. 6 is a block diagram to show functions as provided on MAG or on a filtering agent, which can set the routing preference by proxy of MN;
Fig. 7 shows an example of format of a data packet to be used for notifying a mobile node that a routing path to be selected as a packet route has been intentionally changed in the embodiment of the invention; and
Fig. 8 is a flowchart to show an example of processing, according to which the mobile node judges whether the routing path has been intentionally changed on network side during the processing of the received data packet in the embodiment of the invention.

### BEST MODE FOR CARRYING OUT THE INVENTION

Description will be given below on an embodiment of the invention by referring to the attached drawings. In the description as given below, a specific number, time, structure or protocol name and other parameters may be described in detail to facilitate the explanation of the invention, while specific conditions used in the present specification are merely used to facilitate the explanation of the invention, and these conditions do not in any way limit or restrict the scope and the spirit of the invention.

In the present specification, a method is disclosed, by which a mobile node having a plurality of interfaces sets routing preference in a local mobility domain. According to this method (i.e. a routing method), a routing entity in a local mobility domain can identify and comprehend a method to forward a specific traffic flow (i.e. traffic flow relating to the mobile node) in the local mobility domain. The routing preference (may be described as "preference" or "preference information" in the present specification) is a type of information to specify as to which of the interfaces is used to receive a packet of a specific flow (or to receive via which of addresses or to receive via an address having which of prefixes). According to the present invention, when a mobile node notifies the routing preference to a routing entity (e.g. a local mobility anchor) in a local mobility domain, a routing entity in the local mobility domain can select a routing entry to accomplish the receiving of the packet as specified by the routing preference from a plurality of routing entries in the local mobility domain (setting of the filter rules relating to the flow), and can transfer the packet. When no filter rule is set to the routing entity in the local mobility domain, the routing entity in the local mobility domain can set a new filter rule based on the routing preference notified from the mobile node. Also, the routing entity in the local mobility domain can change the filter rule currently held to a new filter rule based on the routing preference as notified from the mobile node. The filter rule is primarily regarded and handled as a route policy at the routing entity.

In case all of the interfaces of the mobile node are connected to one or more local mobility domains, which are different from the home network domain, the mobile node has such advantage that it has no need to set the routing preference to a home agent by instructing the routing preference to the local mobility domain. In this case, a packet using the preference as defined by the mobile node can be forwarded by the filtering node when the home agent simply transfers the packet destined to the mobile node to a filtering agent of the local mobility domain.

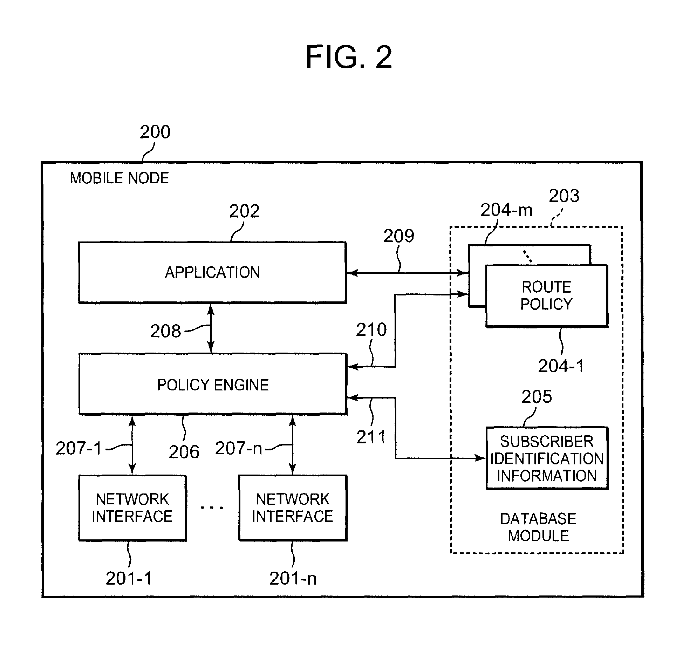

Fig. 2 shows an example of arrangement of a mobile node in an embodiment of the invention. A mobile node (MN) 200 has one or more network interfaces 201-1 to 201-n, one or more applications 202, a database module 203, one or more route policies 204-1 to 204-m, a subscriber identification information 205, and a policy engine 206.

The network interfaces 201-1 to 201-n means that there are "n" number of interfaces ("n" is an integral number of one or higher). Hereinafter, the expression "network interface 201" may be used to indicate an arbitrary network interface selected from the network interfaces 201-1 to 201-n.

The route policies 204-1 to 204-m mean that there are "m" number ("m" is an integral number of one of higher) of route policies. Hereinafter, the expression "route policy 204" may be used to represent an arbitrary route policy selected from the route policies 204-1 to 204-m.

The network interface 201 is a functional block including hardware and software as necessary, by which the mobile node 200 performs communication with the other node via an arbitrary communication medium. If the terms known in the related technical field are used, the network interface 11 represents a communication component of a layer 1 (physical layer) and a layer 2 (datalink layer), a firmware, a driver, a communication protocol, etc. Fig. 1 shows a plurality of network interfaces 201, while the mobile node 200 may have only one network interface 201.

Between the network interface 201 and the policy engine 206, a type of information relating to the transmission of trigger/packet can be given and taken via signal/data paths 207-1 to 207-n.

The application 202 is a functional block to include all protocols and programs on upper positions of the network layer of communication protocol stack. For instance, the following are included in the application 202: a transmission control protocol (TCP), a stream control transport protocol (SCTP), and a user datagram protocol (UDP). Specifically, a transport layer protocol or a session layer protocol or program and software necessary for communication with the other nodes are included.

Packet can be transferred to an adequate program of the application 202 from the policy engine 206 via the signal/data path 208. Similarly, a trigger can be transmitted from the application 202 to the policy engine 206 via the signal/data path 208. It is desirable that the application 202 notifies a route policy 204 relating to a specific program to the policy engine 206.

The database module 203 has the function to store such type of information that the mobile node 200 needs. In a preferred arrangement, the data base module 203 normally has one or more route policies 204. The route policy 204 stores all types of routing preference relating to various types of applications 202. Adequate route policy can be read out and/or updated between the application 202 and the route policy 204 via the signal/data path 209. Also, the policy engine 206 can read out adequate route policy relating to each application 202 via the signal/data path 210.

In a preferred arrangement, the database module 203 has the subscriber identification information 205. All types of information relating to the user of the mobile node 200 are included in the subscriber identification information 205. An example of this subscriber identification information is an international mobile subscriber identifier (IMSI), which a cellular operator uses for authentication of the subscriber. When authentication to the local mobility domain is carried out, the policy engine 206 can acquire the subscriber identification information 205 via the signal/data path 210.

Also, the policy engine 206 decides a route for forwarding the packet for each program of the application 202. The policy engine 206 retrieves the database module 203 based on a trigger (e.g. a trigger including information to indicate the route policy relating to a specific program) received from the application 202, and the policy engine reads out adequate route policy 204. In so doing, the policy engine 206 can support the setting of the routing preference of the local mobility domain by the mobile node 200.

The policy engine 206 has the function to judge whether or not the packet is received via an adequate routing path with regard to the flow of the packets currently receiving. For instance, the policy engine 206 identifies an adequate route policy 204 with respect to a certain flow and comprehends via the signal/data paths 207-1 to 207-n that the flow of the packet currently receiving uses which of the network interfaces 201 or which of the addresses (or prefixes). If the packet currently receiving does not concur with the adequate route policy 204 with respect to a certain flow (i.e. in case the adequate route policy is not accomplished), the policy engine 206 judges that the flow of the packet currently receiving is not passing through the adequate routing path. Next, it is set in such manner that the routing path as desired can be attained by notifying the routing preference included in the adequate route policy 204 to the local mobility domain.

The flow of each packet is managed by a flow management unit (not shown). The flow management unit places each packet flow under management by associating it with the network interface 201 or with an address (or a prefix) as allocated to the mobile node 200. Specifically, the flow management unit manages as to which flow uses which of the network interfaces 201 or which of the addresses (or which of the prefixes).

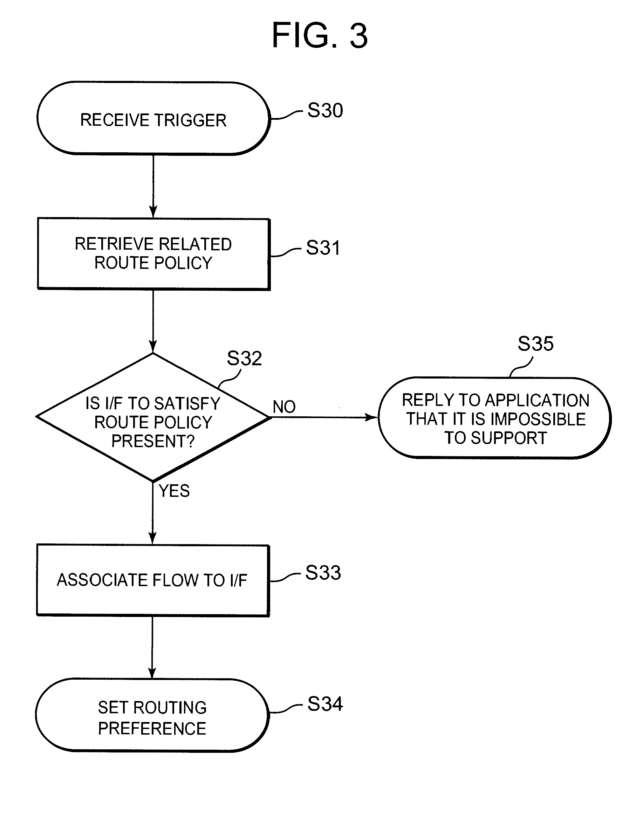

Fig. 3 is a flowchart to show an example of processing by the route policy relating to the application.

In Fig. 3, when the policy engine 206 receives a trigger from the application 202 (Step S30), the processing is started. It is preferable that identification information of the route policy 204 or session identification information of the application 202 is included in the trigger, but it is not limited to this. After the trigger is received in Step S30, an adequate route policy (the related route policy) 204 is retrieved from the database module 203.

When the route policy 204 is acquired, it is checked at the policy engine 206 as to whether the requirements defined by the route policy 204 are satisfied at the network interface (I/F) 201 or not (Step S32). The requirements defined by the route policy 204 may be arbitrary, while it is preferable that various types of requirements to improve communication efficiency are defined such as maximum packet transmission speed, minimum relay time, minimum jitter, minimum error rate, minimum packet loss ratio, etc. In case the network interface 201 is present, which satisfies the requirements defined by the route policy 204, the policy engine 206 selects the network interface 201 and associates the flow (session identification information of the application 202) with the selected network interface (I/F) 201 (Step S33).

When the processing for association in Step S33 has been completed, the policy engine 206 sets the routing preference relating to this session within the local mobility domain by using the selected network interface 201 (Step S34). As a result, a packet with concurrent session identification information is transmitted and received via the selected network interface 201.

On the other hand, in case there is no network interface 201 to satisfy the requirements defined by the route policy 204, the policy engine 206 replies to the application 202 that the flow requirements cannot be supported at present (Step S35). When the operation in this Step S35 is carried out, the application 202 can negotiate again on the flow requirements of this specific program.

Description will be given below on the operation as shown in Fig. 3 by taking a concrete example. It is supposed here that the application 202 has a delay-sensitive TCP session with respect to CN. In this case, the application 202 updates the route policy 20 so that the routing preference relating to the TCP flow can be reflected. When the route policy 204 is updated, the application 202 transmits a trigger to the policy engine 206 to specify that the TCP flow must be forwarded by using the route policy 204.

Based on this trigger, the policy engine 206 retrieves the route policy 204. As a result, it comprehends that the application 202 desires to transmit the TCP flow via the minimum delay route. Then, the policy engine 206 checks the usable network interface 201 and searches an adequate candidate, which can support the condition to transmit the TCP flow with minimum delay.

In the arrangement as shown in Fig. 1, when a cellular network interface (the interface 201 connected to the cellular network) of MN 101 is connected to the local mobility domain, for instance, the policy engine 206 judges that this cellular network interface satisfies minimum delay requirements. As a result, the policy engine 206 transfers the TCP flow to the cellular network interface 201 and forwards it to CN 140. Further, the policy engine 206 sets the routing preference in the local mobility domain by using the method as defined by the present invention.

As described above, for fulfilling the purpose of the invention, it is necessary to define a method, by which MN can sets the routing preference in the local mobility domain. By this method, the packet addressed to the mobile node as transmitted in the local mobility domain can reach MN via a path as desired (i.e. a path according to the routing preference). Therefore, MN must notify the routing preference to a certain entity in the local mobility domain. This entity is referred as a filtering agent. The filtering agent may be realized by one or more local mobility anchors or one or more policy servers, while it is not limited to these.

MN 10 does not necessarily set the routing preference to all of the TCP flows, and it is also not necessary to notify the routing preference relating to all of the TCP flows to a certain entity in the local mobility domain. In this case, by setting that the route in ascending direction (i.e. transmitting direction from MN) will be concurrent with the route in descending direction (i.e. receiving direction to MN) by using a reverse packet flow supposition, for instance, MN can sets so that an interface, via which a packet relating to a specific flow is transmitted, will be the same as an interface, via which a packet relating to the same flow is received.

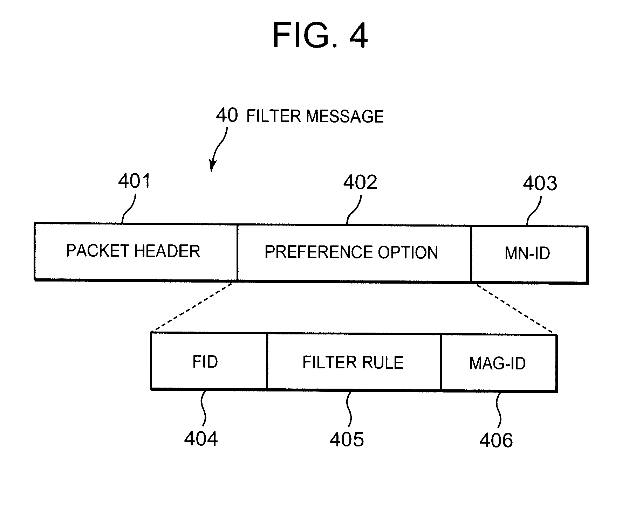

Fig. 4 shows an example of format of a filter message 40, which is used for setting the routing preference in the local mobility domain in the embodiment of the invention.

In Fig. 4, the filter message 40 has a packet header 401, a preference option 402, and a mobile node identifier (MN-ID) 403.

The packet header 401 has, for instance, an IPv4 address or an lPv6 address to indicate a transmitter and a receiver of the message, a type field to indicate a type of this message, a length field to indicate a length of the message, etc., but it is not limited to these.

For instance, when the filter message 40 is transmitted from MN to MAG or to a filtering agent, an address of MN, having the interfaces connected to the local mobility domain, is reflected in the address (source address) in the packet header 401. Also, when the filter message 40 is transmitted from MAG to the filtering agent, for instance, the address of MAG is reflected in the address (Source address) in the packet header 401.

Also, the routing preference of the local mobility domain is described in the preference option 402. For instance, a filter identifier (FID) 404 and a filter rule 405 are included in the preference option 402.

The FID 404 is identifier information to identify various types of filter rules as set at the filtering agent. By this FID 404, the filtering agent can identify and comprehend which of the filter rules is applied to which of the packets transmitted in the local mobility domain.

The filter rules 405 specifies the rules, which the filtering agent must comply for the packets relating to the rules. For instance, a packet, which uses the address of CN 140 as the source address, can set up simple filter rules by instructing that the packet is transferred to a source address as described in the packet header 401 of the filter message 40 (i.e. the transmitter of the filter message 40).

When the filter message 40 is transmitted from MN to the filtering agent, an identifier of MAG (MAG-ID) 406 may be included further in the filter message 40. By the MAG-ID 406, MN can specify as to which of the MAGs the LMA or a policy server should forward a specific flow. In this case, the filter rules are set up so that a packet, having the address of CN 140 as the source address, is transferred to MAG, which is specified as the MAG-ID 406 of the filter message 40.

By the MN-ID 403, the filtering agent can identify as to which MN the filter rules of the filter message 40 are applied, and adequate filter rules relating to MN can be stored or updated. A subscriber identification information 205 may be included in the MN-ID 403, but it is not limited to this.

It is supposed here according to the arrangement as shown in Fig. 1 that MN 101 has two interfaces (i.e. a cellular network interface and a WLAN interface). In this case, it is supposed that the cellular network interface is connected to MAG 111 and performs communication by using CoA.Cellular as CoA. On the other hand, it is supposed that the WLAN interface is connected to MAG 112 and performs communication by using CoA.WLAN as CoA.

MN 101 has a data session currently going on between itself and CN 140. MN sets the preference in the local mobility domain 11 and decides to receive the packet from CN 140 via CoA.WLAN. As a result, MN 101 generates a filter rule, which specifies that a packet having the address of CN 140 as the source address should be forwarded to CoA.WLAN. It is supposed here that this filter rule can be identified by FID, which is described as FID-CN.

MN may notify the routing preference at the local mobility domain to MAG. MAG transfers the routing preference of the mobile node to the filtering agent in the local mobility domain. Also, MAG may store (cache) this routing preference before transferring the routing preference of MN to the filtering agent. As described above, the transfer of the routing preference to the filtering agent by MAG is advantageous in that there is no need to use a searching mechanism (e.g. the technique of IEEE 802.21) to find out the filtering agent for setting up the routing preference to the filtering agent in the local mobility domain. In so doing, it is possible to decrease the number of the signaling message between the mobile node and the local mobility domain.

Now, by taking a concrete example, description will be given below on a method, by which MAG can transfer the routing preference to the filtering agent. In the following, the concrete example will be described by referring to the arrangement shown in Fig. 1.

In Fig. 1, MN 101 transmits a filter message 40 to send the filter rule (FID-CN) to MAG 112. When the filter message 40 is received from MN 101, MAG 112 comprehends that MN 101 desires the setting of the routing preference in the local mobility domain 11. As a result, MAG 112 notifies the routing preference of MN 101 to the filtering agent (LMA 110 or a certain policy server) in local mobility domain 11. Also, MAG 112 may send the setting of the routing of MN 101 by using the filter message 40. Further, MAG 112 may transmit the routing preference of MN 101 by using a method as described in the Non-Patent Document 4 or the Non-Patent Document 5.

MAG may support the operation of MN to set the routing preference in the local mobility domain. In this case, MAG sets up a packet flow in reverse direction by assuming that the paths in two directions will be concurrent with each other in the communication session between MN and the destination node. Therefore, MAG sets up the routing preference at the filtering agent on behalf of MN according to the supposition as described above (i.e. the reverse packet flow supposition). According to the method, by which MAG sets up the routing preference on behalf of MN, it is advantageous in that the mobile node of legacy can use the routing defined by the preference. When the reverse packet flow supposition is used, the routing preference is set so that the paths in two directions concur with each other, while the routing preference may be set according to any other arbitrary condition.

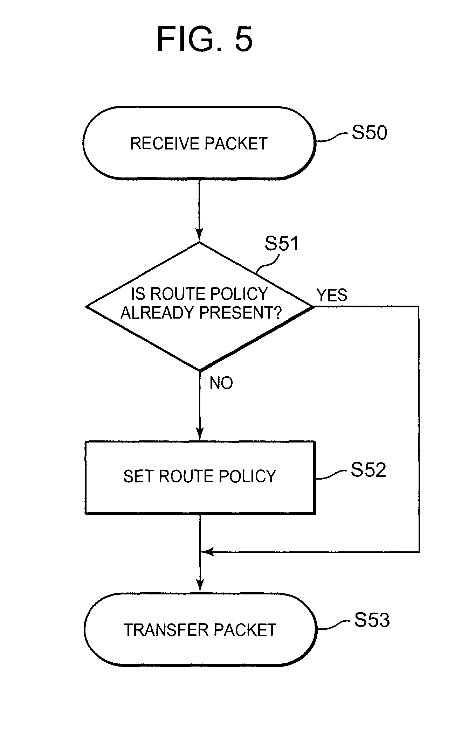

Fig. 5 is a flowchart relating to the reverse packet flow supposition executed by MAG in the embodiment of the invention. In Fig. 5, when MAG receives the packet (Step S50), the processing is started.

First, MAG verifies whether a route policy relating to the packet is present or not (Step S51). By a flow identifier (FID) 404, MAG can verify whether or not the received packet is a part of the packet flow, which already has a route policy. In case there is a route policy relating to the received packet, MAG transfers the packet to the designated destination (Step S53) and terminates the processing.

On the other hand, if a route policy relating to the received packet is not present, MAG sets a route policy relating to this packet flow at the filtering agent (Step S52). As a result, the filtering agent can associate the packet of this flow with the route policy. When the route policy is prepared, MAG transfers the flow to the designated destination (Step S53).

Now, referring to a concrete example, description will be given on a method of the reverse packet flow supposition to be carried out by MAG. In the following, a concrete example will be described by referring to the arrangement shown in Fig. 1.

MN 101 transmits a packet, which has CN 140 as the destination, via MAG 112. When the packet is received, MAG 112 checks the cache in order to judge whether a route policy relating to this packet flow is present or not. It is supposed here that MAG 112 cannot find out the route policy relating to this packet flow. Therefore, MAG 112 sets a routing preference to instruct to forward the packet from CN 140 to LMA 110 via MAG 112 on behalf of MN 101.

Further, the filtering agent may perform the operation to support the setting of the routing preference by MN. In this case, with regard to the packet flow where no relating route policy is present, the filtering agent carries out the method as shown in Fig. 5, for instance.

Further, as an operation, by which MAG judges whether a route policy relating to the packet flow is present or not, MAG may make inquiry as to whether the routing preference of this packet flow is present or not to the filtering agent (LMA 110 or a certain policy server), or the routing preference of MN in cache may be stored before it is transferred to the filtering agent, but it is not limited to this. Further, in case no special preference is needed for the setting of the routing preference, MN may carry out the setting according to the method of the reverse packet flow supposition as a default preference setting.

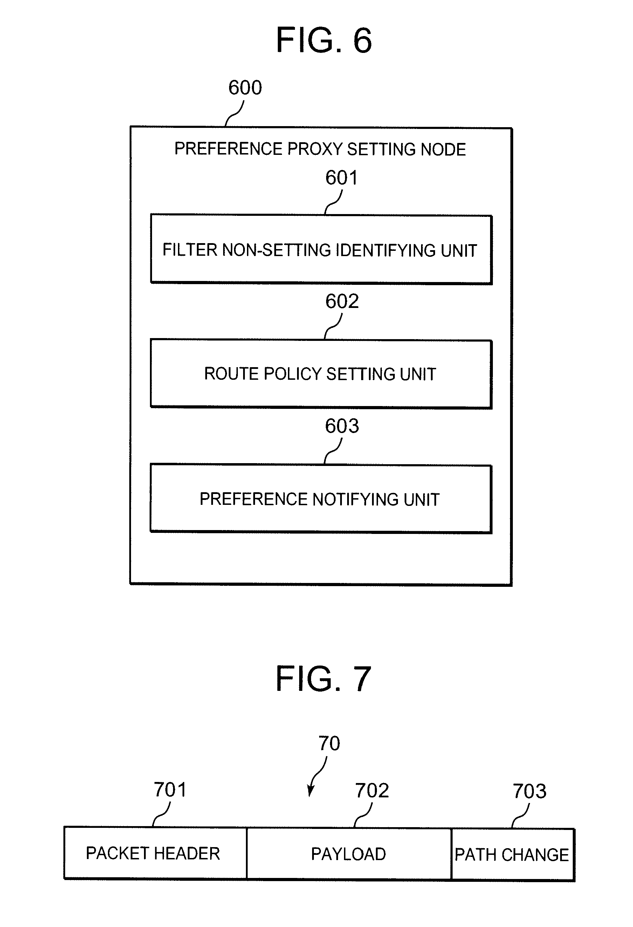

Fig. 6 is a block diagram to show the functions as provided in MAG or the filtering agent to set the routing preference on behalf of MN in the embodiment of the invention. A preference proxy setting node 600 as shown in Fig. 6 is an MAG or a filtering agent, and it can perform the operation to support the setting of the routing preference by MN (i.e. the operation as shown in Fig. 5).

The preference proxy setting node 600 as shown in Fig. 6 has a filter non-setting identifying unit 601, and a preference setting unit 602. The filter non-setting identifying unit 601 has the function to confirm whether a route policy (a filter rule) relating to the received packet is present or not when a packet relating to MN is received (i.e. the function to perform the processing of Step S51 shown in Fig. 5). The route policy setting unit 602 has the function to set a route policy (a filter rule) based on the preference information with respect to this flow when the fact that the route policy of the flow relating to the received packet is not present (i.e. the filter rule of the flow relating to the received packet is not set) is confirmed by the filter non-setting identifying unit 601 (i.e. the function to perform the processing of Step S52 shown in Fig. 5). The route policy by the route policy setting unit 602 can be set by an arbitrary method as described above. It may be set according to the reverse packet flow supposition, or according to the result after making inquiry to the other network node (such as a filtering node).

In case the preference proxy setting node 600 is a network node other than the filtering agent (e.g. in case it is MAG), there is provided a preference notifying unit 603 to notify preference information as set at the route policy setting unit 602 to the filtering agent.

Or, MN may notify the routing preference at the local mobility domain directly to the filtering agent. MN searches the filtering agent in the local mobility domain by using a certain searching mechanism (e.g. the technique according to IEEE 802.21). When the filtering agent is found, the mobile node transmits the routing preference to the filtering agent by using the filter message 40.

According to the present invention, when the routing preference is set in the local mobility domain, MN can definitely receive the packet via the path as desired. Description will be given below as to how far the routing preference can exert influence on the path of the packet in the local mobility domain by taking a concrete example.

It is supposed here that MN 101 sets a filter rule (FID-CN) at LMA 110 to indicate that a packet from CN 140 should be forwarded via MAG 112. When the packet from CN 140 is received via a global communication domain 13, LMA 110 checks the cache and verifies whether MN 101 has set the routing setting relating to this packet flow or not. Here, if LMA 110 identifies the filter rule (FID-CN), which is concurrent with the packet flow, the packet is forwarded to MN 101 via MAG 112 by complying with the filter rule.

On the other hand, if LMA 110 cannot find out the filter rule, which is concurrent with this packet flow, it is possible for LMA 110 to prepare the routing setting on behalf of MN 101 according to the method as shown in Fig. 5. In this case, LMA 110 prepares this filter rule by using the source address and the destination address of the packet. Accordingly, LMA 110 prepares a filter rule, which specifies that the packet from CN 140 (i.e. the source address of the packet) should be forwarded to MN 101 via MAG 112 (i.e. via the MAG address relating to the destination address of the packet).

The present invention can be applied to a system where both of the home network domain 10 and the local mobility domain 11 belong to the same management domain (e.g. a system where the two domains are placed under the management of the same operator). In this system, instead of the method to transmit the routing preference to HA as described in the Non-Patent Document 4 or in the Non-Patent Document 5, MN 101 can set the routing preference at LMA 110 by using the method of the present invention. By applying the present invention, it is possible to decrease the signaling between HA 102 and LMA 110. This is because HA 102 has no need to support the transfer of the routing preference from MN 101 to LMA 110 (the preference relating to the routing in the local mobility domain). Also, HA 102 may associate the routing preference of MN 101 to an adequate MAG before transferring the routing preference of MN 101 to LMA 110. In case HA 102 and LMA 110 can behave in cooperation, HA 120 may fulfill the function to set the filtering rules based on the routing preference and LMA 110 may fulfill the function to perform the filtering of the packet.

According to the present invention, in a system where both of the home network domain 10 and the local mobility domain 11 belong to the same management domain, HA 102 and LMA 110 may be represented by a single entity, and the routing preference may be set at each node. Even in this case, MN 101 can set the routing preference to this entity according to the method of the present invention.

Also, even in a system where both the home network domain 10 and the local mobility domain 11 belong to different management domains (e.g. a system where both domains are placed under management of different operators), communication may be performed in both of the domains, and a filter rule of MN held at one of the domains may be operated at the filtering agent of the other domain.

Further, in case MN 101 is connected to a plurality of interfaces at the same time, LMA 110 may allocate a unique prefix to each of the interfaces of MN 101 for connection (a prefix specific to each of the interfaces), and the present invention can be applied to such system. Hereinafter, a system to allocate unique prefix to each of a plurality of interfaces of MN 101 is referred as a plural prefix model.

For instance, when MN 101 is connected at the same time to MAG 111 and MAG 112 of the local mobility domain 11 in case of the plural prefix model, LMA 110 can instruct to MAG 111 that a prefix (P1) should be notified to MN 101. Similarly, MAG 112 can be instructed that a prefix (P2) (i.e. a prefix different from the prefix (P1)) should be notified to MN 101. In so doing, MN 101 can detect a different prefix at each of the interfaces under the condition that the connection is made to the local mobility domain 11.

In the system of the plural prefix model as described above, LMA 110 may change the entity, which notifies the prefix to MN 101. For instance, under the condition that MAG 111 notifies the prefix (P1) and that MAG 112 notifies the prefix (P2), LMA 110 may instruct MAG 111 to notify the prefix (P2) and may instruct MAG 112 to notify the prefix (P1). The change of the prefix notification as described above is carried out according to any condition as desired. For instance, it is carried out in a case where LMA 110 or other network entity control device in the local mobility domain 11 must carry out the network management of the local mobility domain 11.

When the present invention is applied to a system of the plural prefix model and MN 101 notifies the routing preference as desired to the network side by using the method of the present invention, MN 101 itself can designate the prefix to be used at the interface of MN 101. LMA 110 changes prefix notification according to the routing preference desired by MN 101. As a result, the packet can be forwarded to MN 101 according to the filter rules based on the routing preference of MN 101.

When the present invention is applied, MN 101 can notify to the network side the information indicating which of the prefixes should be used at which of the interfaces as the routing preference as desired. For instance, when MAG 111 notifies the prefix (P1) and MAG 112 notifies the prefix (P2), MN 101 can notify the routing preference to the network side by using the filter message 40 - that is, the routing preference, in which the prefix (P2) is used at the interface connected to MAG 111 and the prefix (P1) is used at the interface connected to MAG 112. According to the routing preference as notified from MN 101, LMA 110 instructs MAG 111 to notify the prefix (P2) to MN 101 and also instructs MAG 112 to notify the prefix (P1) to MN 101. As a result, MN 101 can use the prefix (P2) on the interface connected to MAG 111 and can use the prefix (P1) on the interface connected to MAG 112. In addition to the change of the matching of prefixes, it is possible to apply a method to use preference information to change only the packet flow of a specific condition to the plural prefix model.

Also, in the plural prefix model, it is possible to associate a part or all of a plurality of prefixes as allocated to MN 101 from LMA 110 with the prefixes of higher order (i.e. a prefix with shorter prefix length). That is, among the prefixes allocated to MN 101, a plurality of prefixes having common bit array may be represented by the common bit array (upper prefix). Also, when the prefixes to MN 101 are allocated with high efficiency, all prefixes allocated to MN 101 can be represented by a single upper prefix. In this case, it can be reduced to a single prefix model. In such case, LMA 110 can perform the packet routing to MN 101 in the local mobility domain 11 by using the upper prefixes.

As described above, when a plurality of prefixes allocated to MN 101 are represented by a single upper prefix, and in case the plural prefix model is reduced to a single prefix model, there may be a case where LMA 110 may forward a packet to MN 101 via a routing path different from the path as set according to the routing preference of MN 101.

For instance, it is supposed here that MN 101 is connected to the local mobility domain 11 via two interfaces, and that 65-bit prefixes (Pa, Pb) are allocated to each of the interfaces. When the prefixes (Pa, Pb) allocated to the two interfaces have 64-bit common bit array (Pc) and the value of 65th bit at the end is different, the two prefixes (Pa, Pb) allocated to MN 101 can be represented by the 64-bit common bit array (Pc). That is, the prefixes (Pa, Pb) have the common 64-bit upper prefix (Pc) and 65th bit at the end (values are different from each other in Pa and Pb).

MN 101 can register the upper prefix as a care-of prefix at HA 102. However, even in a case where MN 101 sets a preference that a certain flow ID (FIDa) is to be transmitted to a care-of address including the prefix (Pa) at HA 102, there is a possibility that the forwarding of the packet not based on the preference of MN 101 may be carried out at LMA 110 because LMA 110 cannot identify the preference (e.g. a case where the forwarding of a packet relating to a certain flow ID (FIDa) is changed to the forwarding via MAG 111, to which the prefix (Pb) is notified).

To cope with the situation as such, by using the method of the present invention, it is effective to arrange that the routing preference to each of the prefixes as represented by the upper prefixes is set up to LMA 110. As a result, LMA 110 can correctly forward the packet to MN 101 according to the filter rules based on the routing preference as desired by MN 101.

Even in case where a filtering agent in the local mobility domain 11 (LMA 110 or a certain policy server) identifies the routing preference of MN 101 by using the method of the present invention and can carry out the flow filtering based on the filter rules as set according to the routing preference, the filtering agent may not intentionally comply with the routing preference of MN 101 and may forward the packet to MN 101. For instance, LMA 110 is located at a position to correctly identify the network condition of the local mobility domain and may be able to detect that MAG 111 is under the overloading condition. In such case, to keep the load balance in the local mobility domain 11, LMA 110 may change over the routing path of a part of the packets passing via MAG 111 to a route via MAG 112.

The changeover of the routing paths on the network side may appear to MN 101 that LMA 110 does not identify the routing preference of MN 101. As a result, an operation of the setting of the filter rules at LMA 110 (e.g. re-notification of the routing preference) is started at MN 101. However, because LMA 110 has intentionally changed the routing path of the MN 101, even when a notification of a new routing preference of MN 101 is received, the acceptance of the routing preference is rejected or neglected, and there is high possibility that the forwarding of the packet may be continued via a routing path different from that of the routing preference of MN 101.

As described above, a filter message including the routing preference may be transmitted to the network side because MN 101 cannot identify that the changeover of the routing paths is intentionally carried out by LMA 110. To cope with such problem, it may be so designed that, when the routing path has been changed, LMA 110 can notify its intention (i.e. the fact the routing path has been changed intentionally by LMA 110) to MN 101.

As a method to notify the invention of LMA 110 to MN 101, there is a method to put marking on the packet before LMA 110 transfers the packet destined to MN 101. This marking indicates that LMA 110 has intentionally changed the routing path of the packet to MN 101. As a result, by confirming that this marking is added when the packet is received, MN 101 can identify that the routing path of the packet to MN 101 has been intentionally changed over by LMA 110.

Fig. 7 shows an example of format of the data packet where the marking is added to notify the mobile node that the routing path of the packet has been intentionally changed in the preferred embodiment of the invention.

In Fig. 7, a data packet 70 has a packet header 701, a payload 702, and a path change field 703. In Fig. 7, the path change field 703 is at the furthest end of the packet, while the path change field 703 can be disposed at any position in the packet. For instance, the path change field 703 may be positioned in the packet header 701.

In the packet header 701, there are included: information on source and destination of the message containing an IPv4 address or an lPv6 address (address of the transmitter and address of the receiver), a type field to indicate the type of the message, a length field to indicate the length of the message, etc.

Also, data normally useful for the mobile node is included in the payload 702. The data included in the payload 702 are: sound, animated picture, message, etc., while other types of data may be included or no data may be included.

The path change field 703 is a field added by LMA 110 for the purpose of setting a value, which indicates that the routing path of the packet is intentionally changed. When a specific value is set in the path change field 703, the fact that the routing path of the packet to MN 101 has been intentionally changed over can be notified to MN 101.

It is desirable that the path change field 703 can be represented by a single bit flag, which has a default value of "0" (a condition where the bit flag is not set). When the routing path of the packet has been intentionally changed, the value set in the path change field 703 is changed to "1" (the condition where the bit flag is set). The setting of the values in the path change field 703 may be set by an entity other than LMA 110 (e.g. MAG) to carry out the routing of the packet of MN 101.

By referring to the setting value (bit flag) of the path change field 703 through the processing of the data packet when the data packet 70 is received, MN 101 can confirm whether the routing path in the local mobility domain 11 has been intentionally changed or not.

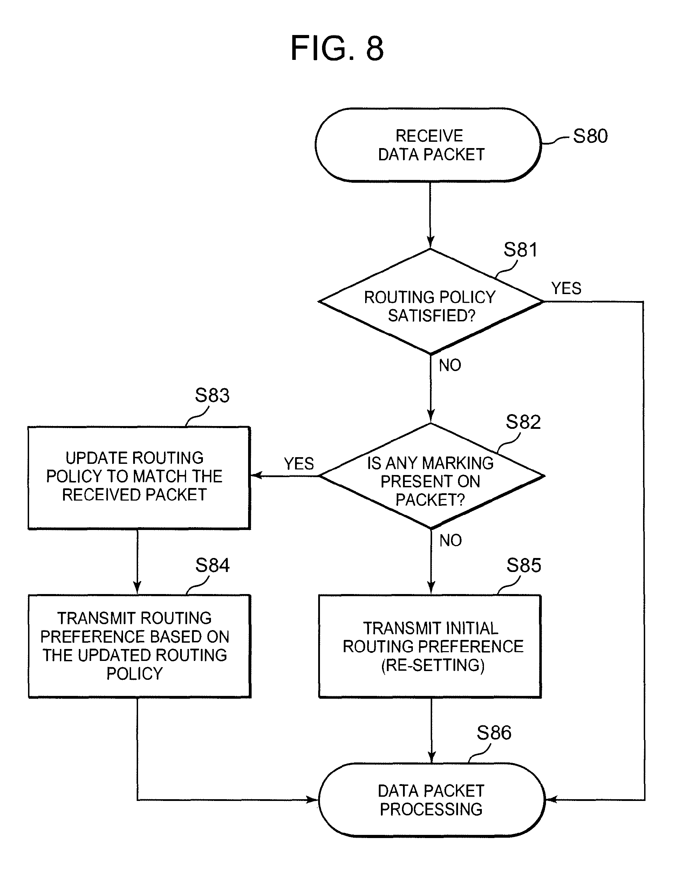

Fig. 8 is a flowchart to show an example of data packet processing, by which MN 101 confirms whether the routing path has been intentionally changed or not according to the preferred embodiment of the invention.

In Fig. 8, when MN 101 receives a data packet 70 in Step S80, the processing of the data packet is started. When the data packet is received, MN 101 checks whether the data packet is forwarded according to the routing preference of MN 101 in Step S81 (i.e. whether the requirements according to the routing policy are satisfied or not). In case it is confirmed that the data packet has been forwarded according to the routing preference of MN 101, MN 101 terminates the processing of this data packet, and further processing (normal data packet processing) is carried out on this data packet.

On the other hand, if it is found that the data packet is not forwarded according to the routing preference of MN 101, MN 101 confirms in Step S82 whether a marking is added or not, which indicates that the changeover of the routing path has been intentionally carried out (i.e. whether a bit flag of the path change field 703 is set or not in the example of the packet format as given above).

The checking as to whether the packet has been forwarded according to the routing preference or not (Step S81) and confirmation as to whether a marking, which indicates that the changeover of the routing path has been intentionally carried out, is added to the data packet or not (Step S82) may be performed in reverse order.

When it is confirmed in Step S82 that a marking is added, which indicates that the changeover of the routing path has been intentionally carried out, MN 101 updates the routing policy according to the result in Step S83.

As a method to update the routing policy, there is a method to change the routing policy by MN 101 in order that the current routing path (i.e. the routing path intentionally changed over on the network side) is reflected well. For instance, according to the routing policy of MN 101, the data packet 70 should reach MN 101 via MAG 111, while it is supposed here that LMA 110 has intentionally forwarded the data packet 70 via MAG 112, and a marking to indicate that the routing path has been intentionally changed over is added to the data packet 70. In this case, when MN 101 receives the data packet 70, it comprehends that the routing path has been intentionally changed over by LMA 110 and updates the routing policy so that the routing path passes via MAG 112 for the packets of the same flow, which are subsequently received as the data packets 70.

When the routing policy is updated at MN 101, MN 101 prepares the routing preference based on the updated routing policy in Step S84 and performs processing to transmit a filter message 40 including this routing preference in order to update the filter rule at LMA 110. It is advantageous in that the filter rule set at LMA 110 is synchronized with the routing policy at MN 101, and that the packet routing to MN 101 in the local mobility domain 11 can be more efficiently executed. After the updating of the filter rule at LMA 110, MN 101 terminates the processing of the data packet in Step S86 and carries out further processing on the data packets (i.e. normal data packet processing).

On the other hand, when it cannot be confirmed in Step S82 that the routing path has been intentionally changed over, MN 101 judges that LMA 110 does not identify the routing preference of MN 101. In this case, MN 101 transmits the filter message 40 including the routing preference of MN 101 to LMA 110 in Step S85. The routing preference of MN 101 in this case is to be initially identified and reflected by LMA 110, and the processing in Step S85 is the processing to re-set the routing preference of MN 101 at LMA 110. When the transmission processing of the filter message 40 has been completed, MN 101 terminates this data packet processing in Step S86 and carries out further processing on this data packet (normal data packet processing).

The marking to indicate that the routing path has been intentionally changed over may not be added to all of the packets concerned, but it may be added to a part of the packets. In this case, it is desirable in the operation shown in Fig. 8 to make final decision after performing sampling on a plurality of packets. The routing path is intentionally changed over - not only in a case where the flows regarded so far as specific types of flows are changed together, but also in a case where a part of the flows is changed for the purpose of dispersing the load. In such case, the packets concurrent with the preference and the packets not concurrent with the preference are detected together. If it is not certain that this is carried out intentionally or not, adequate processing can be carried out according to the present invention. As the method to change the routing policy when it is confirmed that the routing path has been changed intentionally, there is a method to set it as additional routing policy in addition to the method to change so that the changed routing path can be reflected well. As a result, it is possible to easily cope with the intentional but merely temporary changeover on the network side or with partial change for the purpose of dispersing the load. In the operation as shown in Fig. 8, LMA 110 updates the filter rule relating to MN 101 based on the routing preference transmitted from MN 101 in Step S84, while LMA may intentionally change the routing path and may update the filter rule relating to MN 101. In this case, it is desirable that LMA 110 notifies to MN 101 the fact that the filter rule relating to MN 101 has been updated at LMA 110 (or at a policy server). For instance, the fact that the filter rule relating to MN 101 has been updated at LMA 110 (or the policy server) may be notified by using the path change field 703 of the data packet 70 in accordance with the packet format as shown in Fig. 7.

When the updating of the filter rule relating to MN 101 is notified to MN 101 at LMA 110 (or at the policy server), MN 101 can comprehend that the filter rule of MN 101 as set in the local mobility domain 11 (e.g. at LMA 110 or at the policy server) has been changed. This is advantageous in that MN 101 has no need to carry out the operation to transmit the filter message 40 (i.e. the processing of Step S84 shown in Fig. 8) in order to update the filter rule relating to MN 101 as set in the local mobility domain 11 (synchronization of the filter rule).

It may be so designed that the information relating to the network condition in the local mobility domain 11 is notified to MN 101 by using the path change field 703 of the data packet 70. This information relating to the network condition is a type of information useful for specifying other adequate path, and this information is useful in that MN 101 can transmit and receive the data packet via a more adequate routing path.

For instance, it is supposed here that MN 101 can be connected to another mobile access gateway in the local mobility domain 11, and that MN 101 receives the information to indicate that connection can be made to another mobile access gateway or the information to indicate that more efficient transmission can be executed by the packet transmission via another mobile access gateway as the information relating to the network condition in the local mobility domain 11. Based on the information relating to the network condition as notified from LMA 110, MN 101 can transmit and receive the subsequent data packets by selecting the other mobile access gateway rather than MAG 112.

Further, it may be so designed that a request to change the filter rule of HA 102 may be notified to MN 101 by using the path change field 703 in the data packet 70 instead of the change of the filter rule of LMA 110. Such notification is useful when MN 101 is connected to a plurality of local mobility anchors in the local mobility domain 11 and these local mobility anchors have no resource or no function to synchronize the filter rule as set by MN 101. In case the information to request the change of the filter rule of HA 102 is set in the path change field 703, instead of the transmission of the routing preference to update the filter rule in the local mobility domain (e.g. LMA 110) in the processing of Step S84 shown in Fig. 8, MN 101 performs the processing to transmit the routing preference to update the filter rule of HA 102.

Also, it may be so designed that the information relating to the routing path, which can be selected when the changeover of the routing path is necessary (i.e. a backup routing path), can be notified to the local mobility domain 11 from MN 101 side. In this case, MN 101 may notify this information when the changeover of the routing path becomes necessary, and this information may be notified by inserting the information relating to the selectable backup routing path in the preference option 402 in the filter message 40.

Further, MN 101 may set up priority order to various types of routing paths in the local mobility domain 11 and LMA 110 can select the routing paths according to this priority order. For instance, with regard to a specific flow from CN 140, MN 101 notifies the most preferred preference (a first preference) to be forwarded with the highest priority via MAG 111, and a second preference to be forwarded with the second priority via MAG 112. In this case, when LMA 110 receives a packet relating to the flow from CN 140 to be transferred to MN 101, LMA 110 forwards the packet according to the first preference as desired by MN 101 (i.e. via MAG 111). Also, when MAG 111 is in overloaded condition, LMA 110 forwards the packet according to the second preference as desired by MN 101 (i.e. via MAG 112).

When the priority of the routing path is set by MN 101, and when the packet is forwarded by LMA 110 via the routing path other than that of the first preference, MN 101 can comprehend that some problem has occurred in the local mobility domain 11 (i.e. a problem that the routing cannot be carried out according to the first preference). As a result, MN 101 can comprehend that the routing path has been intentionally changed over by LMA 110 when the routing is not carried out according to the first preference, and there is no need to perform operation to transmit the filter message 40 (the processing of Step S84 shown in Fig. 8) in order to update the filter rule relating to MN 101 as set in the local mobility domain 11 (i.e. synchronization of the filter rule).

In this way, the situations may occur where LMA 110 intentionally changes over the routing path of the packets to MN 101 to cope with the problems such as load balance in the local mobility domain 11 or disorder or failure in the local mobility domain. However, according to the present invention, it can be so arranged that MN 101 can identify whether the changeover of the routing path is intentionally carried out or not and that MN 101 can definitely identify the intention of the changeover of the routing path in the local mobility domain 11.

It is desirable that MN starts the operation of the present invention after confirming exact arrangement of the network domain. For instance, it may be so arranged that MN can change its operation by detecting that MN itself is in a local mobility domain other than the home domain, or by detecting that the connected local mobility domain is separated from HA and LMA, or by receiving an instruction from the network, which notifies the routing preference to a network node different from HA.

In the present specification, figures are shown and descriptions are written by giving due consideration so that the present invention is represented by the most practical and the most preferred embodiments, while it would be obvious to those skilled in the art that various changes and modifications can be made without departing from the spirit and the scope of invention on the details of design and parameters relating to the component elements of each of the nodes as described above.

For instance, description is given in the present specification on a case where either LMA or the policy server in the local mobility domain is a filtering agent, while the filtering agent may be realized as a single entity provided with the functions of both LMA and the policy server.

Also, in the present specification, description is primarily given on MN 200, which has a plurality of network interfaces 201, while the present invention is also applicable to a case where the filter rule relating to MN 200, which has only one network interface 201 (the filter rule according to the preference of MN 200), is set on the filtering agent in the mobility management domain of the network base.

In the present specification, description is given by taking examples on the arrangement where the network interface 201 of MN includes components of a layer 1 and a layer 2, while each of these layers may be separately arranged or the number of these layers may be independently provided. For instance, it may be so designed that connection is made from the network unit via a plurality of interfaces to the network and a single wireless unit is commonly used in two or more connection systems by changing the condition at a speed, which causes no substantial problem from the viewpoint of network interface, or by maintaining logical link at the layer 2.

Here, description has been given to explain the present invention based on a simple network configuration as shown in the figures, while the arrangement of the local network domain including the roaming between a plurality of operations may be different and diverse. For instance, there may be an arrangement where MAG is a direct access router of MN, or an arrangement where MAG is a boundary router with different access networks (including roaming), and MN is connected to MAG, which is a boundary router, via the access network after it is connected to a different access network. Although design details such as various types of parameters, the procedure to reach MAG from the terminal, the procedure of communication of terminal are different, it is obvious that each of the arrangement or the condition can be applied to the operation according to the present invention.

MN (mobile terminal) may comprise a plurality of communication devices. For instance, the mobile terminal may be used on an electronic computer such as personal computer provided with outer packaging type or incorporated type 3GPP communication device module and/or a non-3GPP communication device module. The present invention provides the same effects in such diverse types of mobile terminals.

Each functional block used in the description of the embodiments of the present invention as given above can be realized as LSI (Large Scale Integration), typically represented by the integrated circuit. These may be produced as one chip individually or may be designed as one chip to include a part or all. Here, it is referred as LSI, while it may be called IC, system LSI, super LSI, or ultra LSI, depending on the degree of integration.

Also, the technique of integrated circuit is not limited only to LSI and it may be realized as a dedicated circuit or a general-purpose processor. FPGA (Field Programmable Gate Array), which can be programmed after the manufacture of LSI, or a reconfigurable processor, in which connection or setting of circuit cell inside LSI can be reconfigured, may be used.

Further, with the progress of semiconductor technique or other techniques derived from it, when the technique of circuit integration to replace LSI may emerge, the functional blocks may be integrated by using such technique. For example, the adaptation of biotechnology is one of such possibilities.

### INDUSTRIALAPPLICABILITY

The present invention provides the effects to efficiently accomplish the routing according to the preference of the mobile terminal when the mobile terminal is connected to a mobility management domain of network base, which is different from a home network domain, and the invention can be applied to communication technique using IP or in flow filtering technique based on the filter rule.

## Claims

1. A communication system, comprising a network where mobility management protocol of network base is carried out, wherein:
preference information of communication of a mobile terminal connected to said network is notified to a filtering home agent, performing flow filtering relating to communication of said mobile terminal in said network.

2. The communication system according to claim 1, wherein said mobile terminal judges whether a flow of packets of said mobile terminal is passing via the routing path as desired, and in case it is judged that said flow of the packets of said mobile terminal is not passing via said desired routing path, it is so arranged that said preference information to set a filter rule to realize said desired routing path is notified to said filtering agent.

3. The communication system according to claim 2, wherein, in case the filter rule is not set on the flow of the packet of said mobile terminal at said filtering agent, it is so arranged that said filtering agent sets a filter rule based on said preference information to the flow of said packet.

4. The communication system according to claim 2, wherein, in case a filter rule different from the filter rule to realize said preference information as notified from said mobile terminal is set at said filtering agent, said filtering agent is so arranged that said route policy setting means changes said filter rule on said packet flow to a filter rule based on said preference information.

5. The communication system according to claim 1, wherein said mobile terminal places a plurality of packet flows under management for each of interfaces or for each of prefixes, and it is so arranged that an interface or a prefix to receive the packet flow is used as said preference information.

6. A mobile terminal connected to a network where a mobility management protocol of network base is carried out, wherein, said mobile terminal comprises:
one or more interfaces; and
preference notifying means for notifying said preference information to said network so that flow filtering based on the preference information of via said interface is carried out under the condition where said interface is connected to said network.

7. The mobile terminal according to claim 6, wherein, in case said preference information is not available, there is provided transmission and receiving setting means for setting so that the packet is transmitted and received via the same interface.

8. The mobile terminal according to claim 6, wherein said preference notifying means is a connection gateway where said interface is connected, and it is so arranged that said preference information is notified to said connection gateway having functions to transfer said preference information to the filtering agent performing flow filtering related to communication of said mobile terminal in said network.

9. The mobile terminal according to claim 6, wherein:
there is provided searching means for searching a filtering agent for performing flow filtering related to communication of said mobile terminal within said network; and
said preference notifying means directly notifies said preference information to said filtering agent searched by said searching means.

10. The mobile terminal according to claim 6, wherein said mobile terminal comprises:
connection domain confirming means for confirming whether or not it is connected to a local mobility domain different from its own home domain; and
communication control means arranged to control the notification of said preference information by said preference notifying means in case said connection domain confirming means confirms that it is connected to a local mobility domain different from its own home domain.

11. The mobile terminal according to claim 6, wherein said mobile terminal comprises:
arrangement confirming means for confirming that a home agent for performing mobility management according to the mobile IP in a local mobility domain, which is its own connected home domain, and a filtering agent performing flow filtering related to communication of said mobile terminal are realized by the same device or realized by different devices; and
communication control means for controlling so that said preference information by said preference notifying means is notified in case the fact that said home agent and said filtering agent are realized by different devices is confirmed by said arrangement confirming means.

12. The mobile terminal according to claim 6, wherein said mobile node comprises:
flow judging means for judging whether a packet flow is passing via a desired routing path concurrent with said preference information or not; and
in case it is judged that said packet flow is not passing via said desired routing path, it is so arranged that said preference notifying means notifies said preference information to set a filter rule to realize said desired routing path to said filtering agent.

13. The mobile terminal according to claim 6, wherein said mobile terminal comprises flow management means for managing a plurality of packet flows in each of interfaces or in each of prefixes; and
it is so arranged that said preference notifying means uses an interface or a prefix wanting to receive the packet flow as said preference information.

14. A network node, being present within a network where a mobility management protocol of network base is carried out, wherein said network node comprises:
preference receiving means for receiving preference information as notified from said mobile terminal; and
route policy setting means for setting a filter rule to packet flow of said mobile terminal according to said preference information received at said preference receiving means.

15. The network node according to claim 14, wherein said network node comprises filter non-setting identifying means for identifying that no filter rule is set in the packet flow of the mobile terminal connected to said network; and
it is so arranged that the route policy setting means sets a filter rule based on said preference information as notified from said mobile terminal to said packet flow as identified by said filter non-setting identifying means.

16. The network node according to claim 14, wherein:
in case a filter rule different from the filter rule to realize said preference information as notified from said mobile terminal is set, said route policy setting means changes the filter rule relating to said packet flow to a filter rule based on said preference information.

17. The network node according to claim 14, wherein it is so arranged that said route policy setting means sets said filter rule so that a flow direction to transmit the packet from said mobile terminal will be the same as a flow direction of the packet to reach said mobile terminal.

18. The network node according to claim 14, wherein there is provided preference notifying means for notifying and registering said preference information as notified from said mobile terminal to said filtering agent in case said network node is a node other than the filtering agent performing flow filtering related to said communication of said flow.
